# FASCICULE DE BREVET EUROPEEN

(11) **EP 0 728 719 B1**
(45) Date de publication et mention de la délivrance du brevet: **24.10.2001**
(21) Numéro de dépôt: 96400357.8
(22) Date de dépôt: 21.02.1996
(51) Int. Cl.: C05F 17/02, A01C 3/00

(54) **Machine à retourner les andains, notamment de fumier**
Umsetzmaschine für Dung- oder Kompostschwaden
Windrow turning machine specially for manure

(30) Priorité: 21.02.1995 FR 9501995
(43) Date de publication de la demande: 28.08.1996
(73) Titulaire: JEANTIL S.A., F-35590 l'Hermitage (FR)
(72) Inventeur: Jeantil, Philippe, 35310 Mordelles (FR)
(74) Mandataire: Jacobson, Claude

(56) Documents cités:
- WO-A-94/01995
- DE-A- 4 215 599
- US-A- 4 306 686
- US-A- 4 396 292

## Description

La présente invention concerne la technique de l'aération de fumier en vue d'obtenir du compost et elle se rapporte plus particulièrement aux dispositifs retourneurs d'andains de fumier selon le préambule de la revendication 1.

Le retournement du fumier à l'aide d'un dispositif du type précisé assure le broyage du fumier tout en provoquant son aération.

La technique du retournement s'applique également aux déchets forestiers.

L'aération du fumier provoque l'évaporation de l'eau qu'il contient ce qui le rend moins dense et facilite son transport.

Le volume de produit à transporter est ainsi réduit de l'ordre de 30%.

En outre l'aération du fumier favorise la destruction des graines de mauvaises herbes.

Pour faciliter les opérations d'aération on forme des andains de fumiers et après un certain temps de stockage on procède à l'aération du fumier à l'aide d'une machine de retournement.

Parmi les machines connues on peut citer :
- les machines automotrices,
- les machines traînées ou semi-traînées entraînées par un tracteur.

Les machines automotrices sont des machines spécialisées pourvues d'un mécanisme complet d'entraînement incorpore et sont de ce fait d'un prix de revient très élevé compte tenu de leur taux d'utilisation relativement faible dans l'année.

DE-A-4 215 599 décrit une machine à retourner les andains comprenant un bâti pourvu de roues orientables à une de ses extrémités, sur lequel sont montés des moyens de prélèvement de la matière de l'andain et de transfert de cette matière de l'avant vers l'arrière de la machine disposés transversalement à la direction de déplacement de travail de la machine, des moyens d'actionnement des moyens de prélèvement et de transfert à partir de la prise de force d'un tracteur, le bâti de la machine prenant appui à son extrémité opposée aux roues orientables sur un support porté par un bras oscillant muni d'une roue articulée sur le tracteur associé à la machine.

Les machines entraînées par un tracteur ou tractées présentent l'inconvénient d'avoir une vitesse de déplacement qui ne peut être inférieure à la vitesse la plus faible du tracteur et qui est trop importante pour permettre un travail de retournement satisfaisant.

L'invention vise à remédier aux inconvénients des machines connues en créant une machine de retournement qui tout en étant d'un prix de revient raisonnable soit capable de fonctionner avec des vitesses de déplacement compatibles avec l'obtention d'une aération complète du fumier qu'elles retournent.

Elle a donc pour objet un dispositif selon la partie charactérisante de la revendidation 1.

L'invention sera mieux comprise à la lecture de la description qui va suivre faite en référence aux dessins annexes, donnés uniquement à titre d'exemples et sur lesquels :
- la figure 1 est une vue schématique de dessus de la machine à retourner les andains suivant l'invention représentée en position de travail ;
- la figure 2 est une vue schématique de côté du côté gauche de la machine de la figure 1 sans son tracteur ;
- la figure 3 est une vue de côté plus détaillée du côté droit de la machine suivant l'invention
- la figure 4 est une vue partielle à plus grande échelle de la machine représentée à la figure 3 montrant le montage d'une roue directrice de la machine suivant l'invention;
- la figure 5 est une vue partielle de dessus de la machine de la figure 1 montrant plus en détail le dispositif d'attelage avec le tracteur ;
- la figure 6 est une vue en perspective du dispositif d'attelage entre le tracteur et la machine suivant l'invention
- la figure 7 est une vue schématique montrant les moyens de report partiel de la charge du tracteur sur les roues de la machine suivant l'invention lorsqu'elle est en position de travail ;
- la figure 7A est une vue schématique montrant la machine et le tracteur en position de transport ;
- la figure 8 est un schéma hydraulique du circuit d'alimentation des moteurs hydrauliques d'entraînement des roues de la machine ; et
- les figures 8A à 8C sont des vues du distributeur du circuit de la figure 8 montrant celui-ci dans des positions correspondant à différents états du circuit de la figure 8.

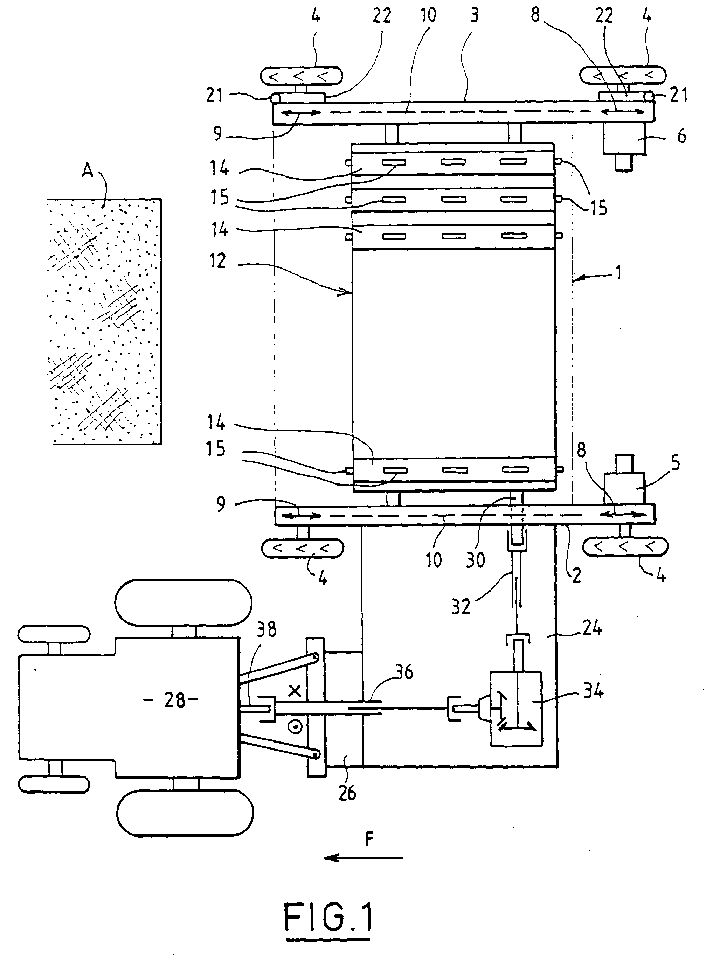

La machine à retourner les andains tels que l'andain A représentée à la figure 1 comporte un bâti 1 en forme de portique dont les montants 2 et 3 portent des roues 4 motrices de la machine.

Les montants 2 et 3 portent chacun un moto-réducteur hydraulique 5,6 d'entraînement des roues de droite et de gauche de la machine.

Les moto-réducteurs hydrauliques assurent l'entraînement des roues avant et arrière par l'intermédiaire d'ensembles de pignons 8,9 et de chaîne 10 associés respectivement aux roues de gauche et aux roues de droite.

Dans le portique ainsi constitué est monté un convoyeur oblique 12 du type comportant des chaînes 14 qui forment des éléments d'entraînement sans fin de doigts 15 de démêlage et d'entraînement des brins de paille et des matières contenus dans le fumier.

Le convoyeur oblique est par exemple du type décrit dans le brevet français n° 93 15 977 appartenant à la demanderesse, incliné vers le bas dans la direction de déplacement de travail de la machine indiquée par la flèche F sur la figure 1.

Bien que dans le présent mode de réalisation un seul convoyeur soit prévu, il est également possible de réaliser la machine suivant l'invention soit avec deux convoyeurs obliques superposés, soit avec un convoyeur oblique et une vis démêleuse disposée dans le bâti au-dessus de ce convoyeur.

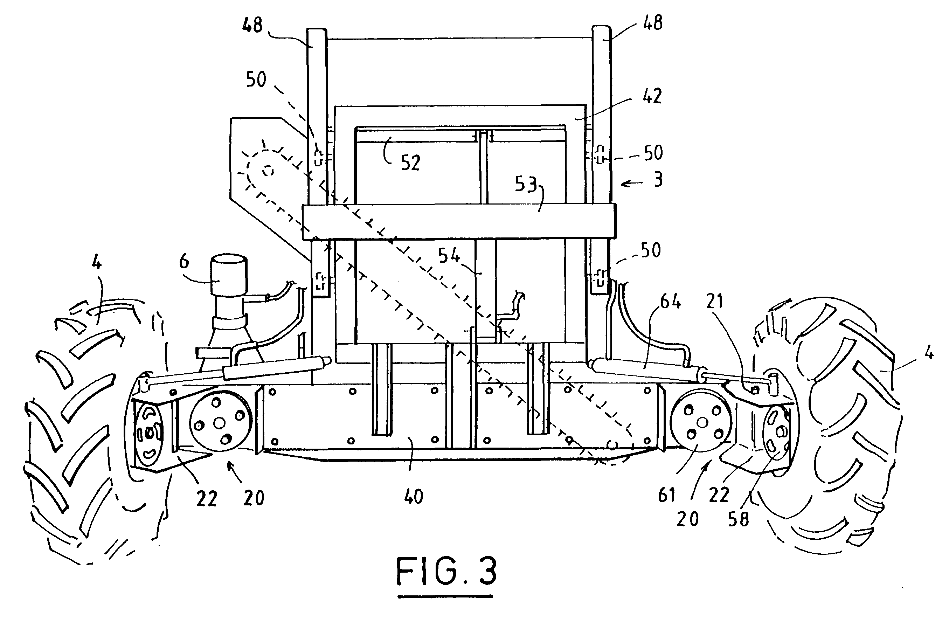

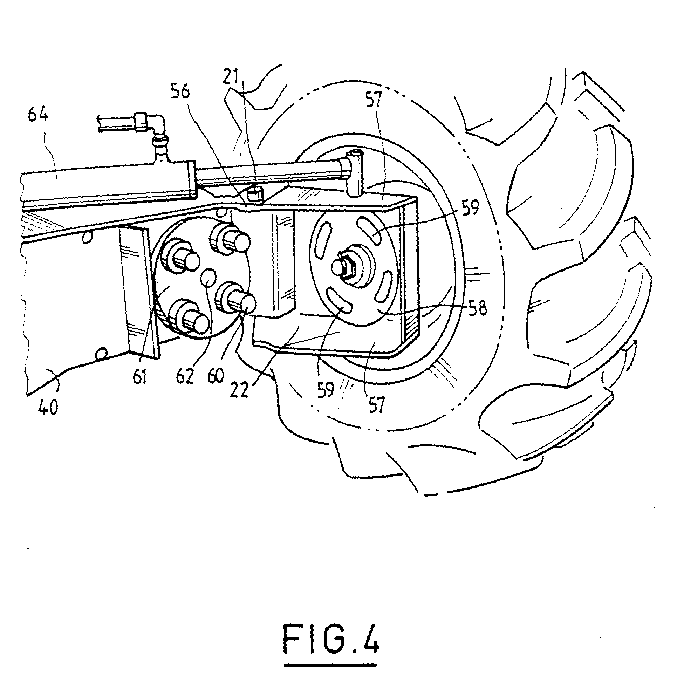

Dans leur position de travail représentée à la figure 1 les roues 4 de la machine sont disposées parallèlement aux montants 2 et 3 du bâti en forme de portique de façon à permettre à la machine de travailler dans une position telle que son côté le plus long correspondant à l'ouverture du portique 1 se trouve face à l'andain à retourner. Les roues de droite sont montées aux extrémités inférieures des montants par l'intermédiaire de supports articulés 20, en forme de charnières, dont l'axe 21 est fixé à l'extrémité correspondante du montant et dont la branche 22 portant la roue est appliquée contre le montant et présente entre la roue 4 et son pignon 8,9 d'entraînement des moyens d'accouplement qui seront décrits par la suite en référence aux figures 3 et 4.

Grâce à cet agencement, les roues 4 de droite peuvent également occuper une position perpendiculaire aux montants 2 et 3 pour permettre de placer la machine en position de transport en vue de la tirer par son côté le plus étroit.

En revanche, les roues de gauche de la machine sont montées fixes sur le montant 2 correspondant. Elles sont donc en permanence orientées dans la direction de travail de la machine de sorte que pour assurer son transport d'un lieu de travail à un autre, on procède à son soulèvement du côté des roues de gauche pour ne la faire rouler que sur les roues de droite, à l'aide de moyens qui seront décrits par la suite.

La machine représentée à la figure 1 comporte en outre un dispositif d'attelage 24 qui s'étend latéralement à partir du côté gauche de la machine si l'on considère son sens de déplacement de travail. Ce dispositif d'attelage coopère avec un dispositif d'attelage complémentaire 26 porté par un tracteur 28 qui est relié à la machine aussi bien lorsqu'elle est en position de travail que lorsqu'elle est en position de transport.

Le tracteur 28 constitue d'une part une source d'énergie hydraulique pour les moto-réducteurs 5,6 d'entraînement des roues 4 de la machine afin de la faire avancer à une vitesse de travail appropriée au retournement d'andains et qui est de l'ordre de 80 m à 1,5 km par heure et d'autre part une source d'énergie mécanique d'entraînement du convoyeur oblique à dents 12.

A cet effet l'un 30 des arbres du convoyeur 12 est relié par une transmission à cardans 32 à l'arbre de sortie d'un renvoi d'angle 34 monté sur le dispositif d'attelage 24 de la machine.

Ce renvoi d'angle peut par exemple être du type à deux boîtiers superposés contenant l'un l'arbre d'entrée et l'autre l'arbre de sortie du renvoi d'angle reliés par un arbre intermédiaire vertical autour duquel les boîtiers sont orientables angulairement l'un par rapport à l'autre.

L'utilisation d'un renvoi d'angle à deux boîtiers superposés de ce type permet de modifier à volonté la direction de déplacement du tracteur par rapport à la machine sans avoir à démonter les moyens de transmission entre la prise de force 38 et le convoyeur oblique 12.

L'arbre d'entrée du renvoi d'angle 34 est relié par une transmission à cardans 36 à la prise de force 38 du tracteur 28.

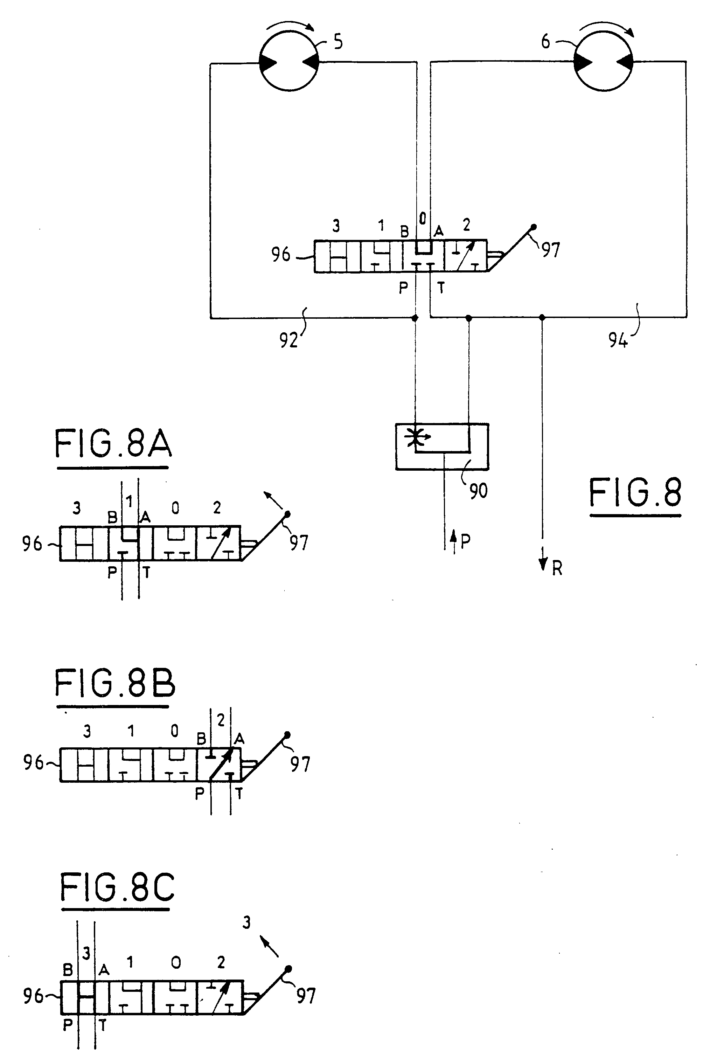

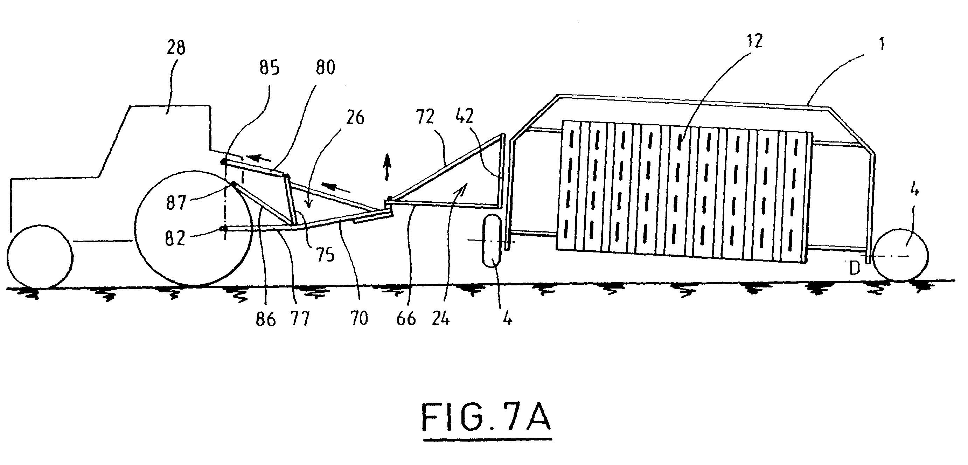

Dans l'agencement de la figure 1, on voit que le tracteur 28 étant lié à la machine pendant son fonctionnement, il est poussé par celle-ci par l'intermédiaire des dispositifs d'attelage 24,26 formant moyens de poussée, pendant le retournement d'andain, à une vitesse déterminée par les moyens de commande des moteurs hydrauliques 5 et 6 qui seront décrits en référence aux figures 8 à 8C.

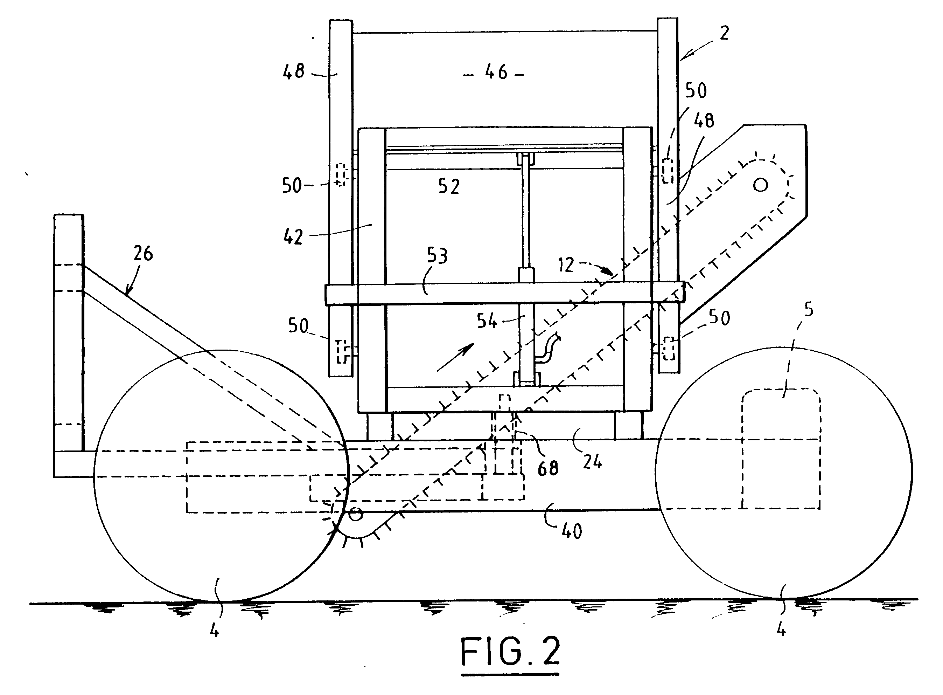

En se référant maintenant à la figure 2, on voit que le montant 2 du bâti 1 en forme de portique de la machine comporte une poutre 40 portant les roues 4 à ses extrémités.

La poutre 40 forme le carter pour les pignons 8,9 et la chaîne 10 de transmission du mouvement de rotation du moteur hydraulique 5 vers les roues 4 correspondantes (figure 1).

Sur la poutre 40 est soudé un cadre 42. Sur le cadre 42 est monté à coulissement un autre cadre 46 du bâti portant le convoyeur 12 et formé de deux rails verticaux 48 guidés par des galets tels que 50 portés par le cadre 42.

Les rails verticaux 48 sont reliés entre eux par des traverses 52,53 dont l'une 52 est reliée à la tige d'un vérin de levage 54 dont le corps est relié à la base du cadre 42.

Le montant 3 du portique représenté à la figure 3 est semblable au montant 2 de sorte qu'en agissant sur les deux vérins 54 de liaison des cadres 42 avec les cadres 46 du portique on peut assurer le réglage en hauteur du convoyeur 12 afin de lui permettre de retourner des andains de hauteur variable et ceci de la base de d'andain à son sommet.

Les roues 4 de droite de la machine situées à l'opposé du dispositif d'attelage 24 sont montées aux extrémités de la poutre 40 correspondante au moyen de charnières 20 qui comme représenté plus en détail à la figure 4 comportent chacune une broche 21 formant axe d'articulation engagée dans des pattes 56 prévues à chaque extrémité de la poutre 40 et une branche 22 solidaire de l'axe de la roue 4.

La branche 22 de la charnière d'articulation est constituée par un tronçon de profilé en U fixé par son âme à l'axe de la roue 4 et dont les ailes 57 ont un écartement légèrement supérieur à la hauteur de la poutre 40 afin de permettre l'application de l'âme de la branche 22 contre la paroi extérieure de cette dernière.

L'âme de la branche 22 comporte un orifice circulaire dans lequel est disposé un disque 58 solidaire du moyeu de la roue 4 et qui comporte des trous 59 d'accouplement avec des doigts 60 d'un disque d'accouplement complémentaire 61 porté par un arbre court 62 qui traverse la paroi latérale de la poutre 40 et qui est entraîné en rotation par le moteur hydraulique 6 par l'intermédiaire des moyens de transmission à pignons 8,9 et à chaîne 10 correspondants.

Les doigts 60 sont réalisés escamotables à l'encontre de l'action de forts ressorts de rappel en position' sortie (non représentés), ce qui permet un engagement aisé des doigts 60 dans les trous d'accouplement 59 portés par le disque 58 solidaire du moyeu de chaque roue de droite 4 de la machine, lors du passage de ces roues de leur position de transport à la position de travail de la machine.

Ainsi qu'on le voit clairement à la figure 3, chacune des branches 22 des charnières d'articulation des roues 4 de droite sur leur poutre 40 est reliée à la tige d'un vérin 64 dont le corps est articulé sur la poutre 40.

Le vérin 64 est destiné à faire passer chaque roue de droite 4 de sa position de transport représentée à la figure 3 dans laquelle les moyens d'accouplement 58,59 de la roue ne sont pas en prise avec les moyens d'accouplement complémentaire menants 60,61 représentés à la figure 4, à sa position de travail, parallèle à la poutre 40 et dans laquelle les moyens d'accouplement précités viennent en prise et rendent la roue 4 motrice.

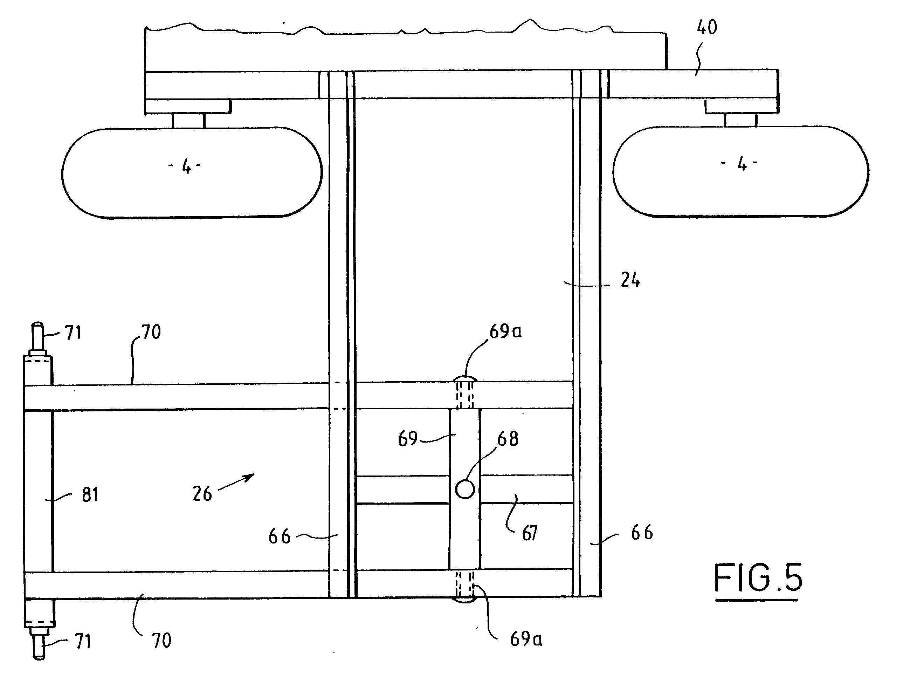

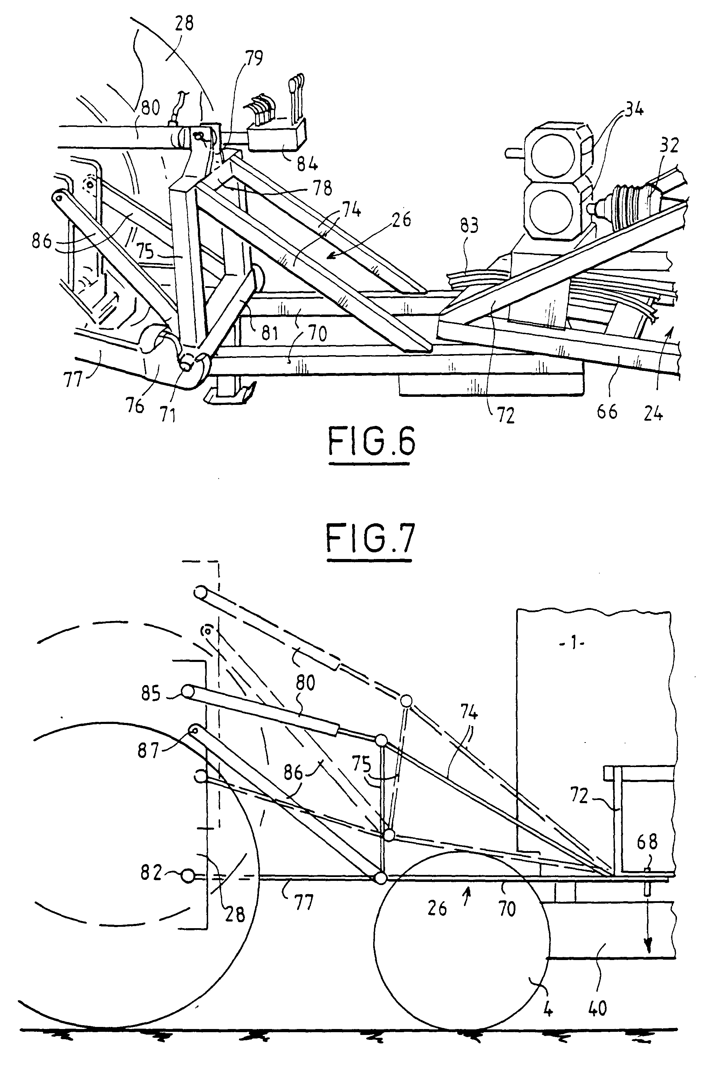

Le dispositif d'attelage de la machine suivant l'invention est représenté plus en détail aux figures 5 et 6.

Il comporte des poutrelles 66 parallèles entre elles et à la dimension transversale de la machine, fixées à la poutre 40 supportant les roues de gauche de la machine.

Les poutrelles 66 sont réunies par une entretoise 67 qui comporte un pivot 68 d'articulation du dispositif d'attelage 26 du tracteur par l'intermédiaire d'une entretoise 69 portant à ses extrémités des tourillons 69a d'articulation de branches parallèles 70 du dispositif d'attelage 26 relié au tracteur 28 (figures 1 et 5).

A leurs extrémités opposées aux tourillons 69a les branches 70 comportent des tourillons 71 d'articulation avec les barres de traction du tracteur 28.

Cet agencement apparaît plus clairement à la figure 6 sur laquelle on voit que les dispositifs d'attelage 24,26 de la machine suivant l'invention et du tracteur 28 sont en fait constitués par des berceaux en treillis métallique soudé. Le berceau solidaire de la machine est formé des poutrelles parallèles 66 disposées horizontalement et réunies au cadre de coulissement 42 au moyen de poutrelles inclinées 72.

Le berceau ainsi constitué supporte le renvoi d'angle 34.

Les branches 70 du dispositif d'attelage 26 associé au tracteur sont également rigidifiées par des barres de renforcement inclinées 74 soudées entre une zone intermédiaire de chaque branche 70 et les extrémités supérieures de barres verticales 75 également reliées par soudage à l'extrémité de chaque branche 70 opposée au dispositif d'attelage 24 de la machine et portant les articulations 71 engagées dans des crochets 76 des barres de traction 77 du tracteur 28.

A leurs extrémités supérieures les barres verticales 75 sont réunies par soudage par une traverse 78 qui porte une articulation 79 avec la tige d'un vérin 80 de report de la charge des roues arrière du tracteur sur les roues de gauche de la machine à retourner les andains suivant l'invention, dont le fonctionnement sera décrit en référence aux figures 7 et 7A. Le vérin 80 est substitué à la barre de poussée normalement disposée à cet endroit.

Les barres verticales 75 constituent avec la traverse 78 et avec une traverse 81 portant les tourillons d'articulation 71 un montant du dispositif d'attelage 26 au moyen duquel il est relié au tracteur 28. Des barres 86 de stabilisation relient la base du montant à des points de liaison 87 du châssis du tracteur 28.

On aperçoit également sur la figure 6 les tuyauteries de transport de fluide sous pression et un distributeur de commande 84 des divers vérins tels que les vérins 54 de montée et de baisse du bâti 1 du convoyeur 12 et les vérins 64 de changement de position des roues 4 de droite entre l'état de travail et l'état de transport de la machine et le vérin 80 de report de charge.

La figure 7 montre un schéma des moyens de report de la charge des roues arrière du tracteur 28 sur les roues de gauche de la machine suivant l'invention.

On voit sur cette figure que l'attelage 26 lié au tracteur 28 et plus particulièrement les branches horizontales 70 de celui-ci, est relié à l'attelage 24 solidaire de la machine au moyen de l'axe de pivotement vertical 68 par l'intermédiaire duquel et de l'entretoise 69 il prend appui sur l'attelage 24.

Le vérin 80, les barres de traction 77 du tracteur et le montant vertical 75,78,81 de l'attelage 26 lié au tracteur forment en quelque sorte un quadrilatère déformable dont trois côtés à savoir les barres de traction 77, les barres verticales 75 du montant et la distance entre les points de liaison 82 et 85 des barres de traction 77 et du corps du vérin 80 avec le châssis du tracteur ont des longueurs constantes et un côté, à savoir le vérin 80 a une longueur variable.

Les barres de stabilisation 86 fixées aux points 87 de liaison sur le châssis du tracteur et à l'extrémité du montant 75,78,81 reliée aux barres de traction 77 assurent la rigidité des barres de traction.

Par conséquent, lorsque le vérin 80 n'est pas actionné il se trouve à l'état de repos et complétement libre, représenté en trait plein à la figure 7 et les roues arrière du tracteur 28 prennent appui complètement sur le sol.

Si l'on souhaite opérer un report de la charge des roues arrière du tracteur sur les roues de gauche de la machine afin d'en améliorer l'adhérence, on actionne le vérin 80 dont l'allongement par rapport à son état de repos provoque l'application d'un effort sur la traverse 78 de liaison des barres verticales 75 et la transmission de cet effort par les triangles indéformables formés par les branches 70, les barres verticales 75 et les barres de renforcement 74, au pivot 68 de liaison entre le dispositif d'attelage 26 du tracteur et le dispositif d'attelage 24 de la machine.

Ce pivot étant fixe, il y a soulèvement des roues arrière du tracteur 28 qui occupent alors la position représentée en trait mixte sur la figure 7 de sorte que la charge qu'il représente est partiellement reportée verticalement de haut en bas sur l'articulation du dispositif d'attelage 26 avec le dispositif d'attelage 24 de la machine et par conséquent sur la machine.

Le poids de la machine à retourner les andains suivant l'invention est de l'ordre de 2 tonnes alors que celui du tracteur associé à la machine est de 4 tonnes.

Une telle disposition accroît donc considérablement l'adhérence des roues de gauche de la machine.

Afin d'améliorer encore l'adhérence, il est possible de remplir les pneumatiques des roues 4 avec de l'eau.

Il est en outre possible de prévoir des roues de gauche et de droite jumelées.

Il est également possible de lester les roues de droite par des contrepoids (non représentés).

Pour placer la machine en position de transport représentée à la figure 7A, il suffit d'actionner les vérins 64 pour faire passer les roues de droite de la machine dans des positions parallèles à la longueur du bâti.

Les roues de droite deviennent alors les roues arrière.

Il suffit ensuite, grâce au vérin de soulèvement de gauche 54, de placer le bâti portant le convoyeur 12 en position haute. Puis à l'aide du vérin 80 que l'on actionne pour faire rentrer sa tige dans le corps du vérin, on provoque du fait du raccourcissement du vérin par rapport à son état de repos, le déplacement angulaire du berceau formé par les barres 70, les barres verticales du montant 75 et les barres inclinées 74 autour des crochets d'extrémité des barres de traction 77 et le soulèvement du dispositif d'attelage 24 et par conséquent des roues de gauche de la machine.

La machine prend alors appui sur les roues arrière et peut être ainsi remorquée par le tracteur à une vitesse comprise entre 1,5 km/h et 30 km/h.

Afin d'éviter des risques de détérioration des moteurs hydrauliques en raison d'une vitesse excessive des roues provoquée par le tracteur, une roue libre (non représentée) est interposée entre chaque moteur et son réducteur correspondant.

La commande hydraulique des moteurs d'entraînement des roues de la machine à retourner les andains qui vient d'être décrite est assurée par le dispositif représenté à la figure 8.

Ce dispositif comporte les deux moteurs hydrauliques 5 et 6 d'entraînement des roues de gauche et de droite de la machine alimentés en fluide sous pression à partir de la pompe hydraulique du tracteur 28 (figure 1) non représentée par l'intermédiaire d'un diviseur de débit 90 relié d'une part à un circuit 92 d'alimentation du moteur de gauche 5 et d'autre part à un circuit 94 d'alimentation du moteur de droite 6 par l'intermédiaire d'un distributeur 96 ayant un seul levier de commande 97 des roues motrices.

Le distributeur 96 est monté sur la machine mais il est accessible à partir du siège du tracteur 28.

Sur la figure 8, le distributeur assure la liaison de la pompe du tracteur avec les deux moteurs 5 et 6 qui tournent à la même vitesse et qui assurent le déplacement de la machine en ligne droite en position de travail.

Pour régler la vitesse de travail de la machine, on agit sur le diviseur de débit 90.

Le levier 97 du distributeur est dans sa position centrale stable.

On voit que les deux moteurs 5 et 6 sont reliés en série entre la haute pression P et le retour R.

La figure 8A montre le distributeur 96 dans une position de commande de virage à droite dans laquelle le moteur de droite 6 n'est pas alimenté alors que le moteur de gauche 5 seul est alimenté.

La figure 8B montre le distributeur 96 dans une position de commande de virage à gauche dans laquelle le moteur de droite est alimenté alors que le moteur de gauche ne l'est pas.

La figure 8C montre le distributeur en position de différentiel dans laquelle aucun des moteurs hydrauliques n'est alimenté. Dans cette position, aucun travail n'est demandé aux roues 4. Elles sont folles.

Le changement de position du distributeur 96 est assuré par un seul et même levier de manoeuvre 97 qui comporte outre la position O de travail normal, des positions 1 et 2 correspondant respectivement aux virages à droite et à gauche et une position 3 crantée correspondant à l'état différentiel de non entraînement des roues 4.

Enfin les vérins élévateurs 54 du bâti pourvu du convoyeur 12, les vérins 64 de changement de direction des roues de droite et le vérin 80 de report de charge sont commandés par des distributeurs hydrauliques appropriés du commerce.

On voit que grâce à l'agencement qui vient d'être décrit, on obtient une machine à retourner les andains de fumier qui allie une relative simplicité de construction à des performances remarquables, notamment en ce qui concerne le réglage de sa plage de vitesses de déplacement en fonction de la compacité de la matière de l'andain à traiter.

## Revendications

1. Dispositif pour retourner les andains, comprenant un tracteur (28) et une machine à retourner les andains, notamment de fumier, comprenant un bâti (1) pourvu de roues (4) sur lequel sont montes des moyens de prélèvement de la matière de l'andain et de transfert de cette matière de l'avant vers l'arrière de la machine disposes transversalement à la direction de déplacement de travail de la machine, des moyens (30,32,34,36) d'actionnement des moyens de prélèvement et de transfert (12) à partir de la prise de force (38) du tracteur (28), un dispositif d'attelage (24) s'étendant perpendiculairement aux roues (4) de la machine en position de travail, ce dispositif d'attelage coopérant avec un dispositif d'attelage (26) associé au tracteur (28) articulé sur le dispositif d'attelage (24) de la machine et s'étendant perpendiculairement à celui-ci en position de travail, le tracteur constitue par ailleurs une source d'énergie pour alimenter des moyens d'actionnement (5,6,8,9,10) des roues (4) de la machine **caractérisée en ce que** les dispositifs d'attelage (24,26) constituent alors des moyens de poussée du tracteur (28) par la machine et **en ce que** les roues (4) situées du cote de l'attelage (24) de la machine sont en permanence orientées dans la direction de travail de la machine tandis que les roues (4) situées à l'opposé de l'attelage sont orientables entre la direction de travail et la position de transport et **en ce qu'**elle comporte en outre des moyens (80,26) de soulèvement du dispositif d'attelage (24) de la machine et des roues (4) de celle-ci situées du côté du dispositif d'attelage pour placer la machine en position de transport.

2. Dispositif suivant la revendication 1, **caractérisée en ce que** les moyens d'actionnement des moyens de prélèvement et de transport (12) comportent une transmission à cardans (32) reliée entre un arbre (30) desdits moyens du prélèvement et de transfert et l'arbre de sortie d'un renvoi d'angle (34) porte par le dispositif d'attelage (24) de la machine et une transmission à cardans (36) de liaison de l'arbre d'entrée du renvoi d'angle (34) avec la prise de force (38) du tracteur (28).

3. Dispositif suivant la revendication 2, **caractérisée en ce que** le renvoi d'angle (34) est du type à boîtiers superposés contenant l'un, l'arbre d'entrée et l'autre, l'arbre de sortie du renvoi d'angles reliés entre eux par un arbre intermédiaire vertical autour duquel les boîtiers sont orientables l'un par rapport à l'autre.

4. Dispositif suivant l'une des revendications 1 à 3, **caractérisée en ce que** les moyens d'actionnement des roues (4) de la machine comportent des moto-réducteurs hydrauliques (5,6) d'entraînement des roues de droite et de gauche de la machine par l'intermédiaire d'ensembles de pignons et de la chaîne (8,9,10) portés par le bâti (1) de la machine, lesdits moto-réducteurs hydrauliques étant alimentés en fluide sous pression à partir de la pompe hydraulique du tracteur (28) par l'intermédiaire d'un distributeur (96) à un seul levier de manoeuvre (97) ayant une position neutre, de travail normal, deux positions correspondant respectivement aux virages à gauche et à droite et une position crantée correspondant à l'état différentiel de non entraînement des roues (4) de la machine.

5. Dispositif suivant la revendication 4, **caractérisée en ce que** chaque moto-réducteur hydraulique comporte une roue libre interposée entre son moteur hydraulique et son réducteur.

6. Dispositif suivant l'une des revendications 4 et 5, **caractérisée en ce que** dans le circuit d'alimentation des moto-réducteurs hydrauliques (5,6) est interposé un diviseur de débit (90) permettant le réglage de la vitesse de travail de la machine.

7. Dispositif suivant la revendication 6, **caractérisée en ce que** la vitesse de travail de la machine est comprise entre 80 m/h et 1,5 km/h.

8. Dispositif suivant l'une des revendications 1 à 7, **caractérisée en ce que** les roues (4) de gauche et de droite de la machine sont portées par des poutres (40) correspondantes formant carters pour les ensembles de pignons et de chaîne (8,9,10) et sur chacune desquelles est monté un premier cadre (42), un second cadre (46) du bâti portant le convoyeur (12) étant monté à coulissement sur le premier cadre (42), la poutre (40), le premier cadre (42) et le second cadre (46) associés formant chacun des montants (2,3) du bâti de la machine et **en ce qu'**un vérin (54) de levage est interposé entre le premier cadre (42) et le second cadre (46) de chaque montant.

9. Dispositif suivant la revendication 8, **caractérisée en ce que** chaque second cadre (46) de chaque montant (2,3) du bâti (1) comporte des rails verticaux (48) guidés par des galets (50) portés par le premier cadre (42) et reliés entre eux par des traverses (52,53) dont l'une (52) est reliée à la tige du vérin de levage (54).

10. Dispositif suivant l'une des revendications 1 à 9, **caractérisée en ce que** les roues (4) situées à l'opposé du dispositif d'attelage (24) sont les roues de droite de la machine et sont montées aux extrémités de la poutre (40) correspondante au moyen d'articulations à charnières (21,22), des moyens d'accouplement débrayables (58,59,60,61) assurant l'entraînement des roues de droite (4) lorsqu'elles sont disposées parallèlement à la poutre (40) en position de travail de la machine et **en ce qu'**à chacune desdites roues de droite (4) est associé un vérin (64) d'orientation de la roue entre sa position de travail dans laquelle les moyens d'accouplement sont en prise et sa position de transport dans laquelle les moyens d'accouplement sont débrayés.

11. Dispositif suivant la revendication 10, **caractérisée en ce que** les moyens d'accouplement débrayables de chacune des roues de droite (4) comportent un disque d'accouplement (58) solidaire de la roue (4) et comportant des trous d'accouplement (59) destinés à recevoir des doigts d'accouplement escamotables (60) sollicités élastiquement en position sortie, portés par un disque (61) d'accouplement complémentaire entraîné par le moteur hydraulique (6) correspondant.

12. Dispositif suivant l'une des revendications 1 à 11, **caractérisée en ce qu'**elle comporte en outre des moyens (75,77,80) de report partiel de la charge du tracteur (28) sur les roues (4) de la machine situées du côté de l'attelage afin d'améliorer leur adhérence, les moyens de report de charge comprenant un vérin (80) disposé en remplacement de la barre de poussée du tracteur articulé à son extrémité opposée au tracteur sur un montant (75,78,81) du dispositif d'attelage (26) associé au tracteur relié aux barres de traction (77) de celui-ci, l'allongement dudit vérin (80) provoquant le déplacement par rapport à son état de repos vers le haut du dispositif d'attelage (26) associé au tracteur (28) par prise d'appui sur le dispositif d'attelage (24) de la machine et assurant ainsi le soulèvement des roues arrière du tracteur (28) et le raccourcissement dudit vérin (80) par rapport à son état de repos provoquant le déplacement angulaire du dispositif d'attelage (26) et de ce fait le soulèvement du dispositif d'attelage (24) de la machine et celui des roues de celle-ci situées du côté du dispositif d'attelage pour placer la machine en position de transport.

13. Dispositif suivant la revendication 12, **caractérisée en ce que** les moyens de report partiel de charge comportent en outre au moins une barre de stabilisation (86) reliée en un point (87) sur le châssis du tracteur et à l'extrémité du montant (75,78,81) reliée aux barres de traction (77) du tracteur.

14. Dispositif suivant l'une quelconque des revendications 1 à 13, **caractérisée en ce que** les moyens de prélèvement et de transfert de la matière de l'andain comprennent au moins un convoyeur oblique (12) pourvu d'au moins un élément sans fin (14) muni de doigts (15) de prélèvement et d'entraînement de la matière de l'andain ledit convoyeur étant incliné vers le bas dans la direction de déplacement de travail de la machine.

15. Dispositif suivant l'une quelconque des revendications 1 à 14, **caractérisée en ce qu'**elle comporte un convoyeur oblique et une vis démêleuse disposée dans le bâti au-dessus du convoyeur.

16. Dispositif suivant l'une des revendications 1 à 14, **caractérisée en ce qu'**elle comporte deux convoyeurs obliques superposés portés par le bâti de la machine.

## Patentansprüche

1. Vorrichtung zum Wenden von Schwaden, umfassend einen Schlepper (28) und eine Maschine zum Wenden von Schwaden, insbesondere Dungschwaden, bestehend aus einem mit Rädern (4) versehenen Gestell (1), auf dem folgende Einrichtungen montiert sind: zur Arbeitsbewegungsrichtung der Maschine quer angeordnete Mittel zur Entnahme von Schwadenmaterial und zum Umsetzen dieses Materials bezüglich der Maschine von vorne nach hinten, Mittel (30,32,34,36) zum Antrieb der Entnahme- und Umsetzmittel (12) ausgehend von der Zapfwelle (38) des Schleppers (28), eine Kupplungsvorrichtung (24), die sich senkrecht zu den Rädern (4) der Maschine in Arbeitsstellung erstreckt und mit einer dem Schlepper (28) zugeordneten Kupplungsvorrichtung (26) zusammenwirkt, die an der Kupplungsvorrichtung (24) der Maschine angelenkt ist und sich zu dieser in Arbeitsrichtung senkrecht erstreckt, wobei der Schlepper ferner eine Energiequelle zur Versorgung der Mittel (5,6,8,9,10) zum Antrieb der Räder (4) der Maschine bildet, **dadurch gekennzeichnet, dass** die Kupplungsvorrichtungen (24,26) dabei Mittel zum Schieben des Schleppers (28) durch die Maschine bilden und dass die auf der Seite der Kupplung (24) der Maschine gelegenen Räder (4) ständig in der Arbeitsrichtung der Maschine gerichtet sind, während die auf der der Kupplung entgegengesetzten Seite gelegenen Räder (4) zwischen der Arbeitsrichtung und der Transportstellung verschwenkbar sind, und dass sie ferner Mittel (80,26) zum Anheben der Kupplungsvorrichtung (24) der Maschine und ihrer auf der Seite der Kupplungsvorrichtung gelegenen Räder (4) zum Überführen der Maschine in die Transportstellung aufweist.

2. Vorrichtung nach Anspruch 1, **dadurch gekennzeichnet, dass** die Mittel zum Antrieb der Entnahme- und Fördermittel (12) einen Kardantrieb (32), der zwischen einer Welle (30) der Entnahme- und Umsetzmittel und der Austrittswelle eines von der Kupplungsvorrichtung (24) der Maschine getragenen Winkeltriebs (34) angeordnet ist, und einen Kardantrieb (36) zur Verbindung der Eintrittswelle des Winkeltriebs (34) mit der Zapfwelle (38) des Schleppers (28) umfassen.

3. Vorrichtung nach Anspruch 2, **dadurch gekennzeichnet, dass** der Winkeltrieb (34) zwei übereinander angeordnete Gehäuse umfasst, deren eines die Eintrittswelle und deren anderes die Austrittswelle des Winkeltriebs enthält, die miteinander durch eine vertikale Zwischenwelle verbunden sind, um die die Gehäuse gegeneinander verschwenkbar sind.

4. Vorrichtung nach einem der Ansprüche 1 bis 3, **dadurch gekennzeichnet, dass** die Mittel zum Antrieb der Räder (4) der Maschine Hydrogetriebemotoren (5,6) zum Antrieb der rechten und linken Räder der Maschine über vom Gestell (1) der Maschine getragene Zahnräder-Kette-Einheiten (8,9,10) umfassen, wobei diese Hydrogetriebemotoren mit Druckfluid von der Hydropumpe des Schleppers (28) aus über einen Verteiler (96) mit einem einzigen Bedienungshebel (97) versorgt werden, der eine neutrale Stellung, eine normale Arbeitsstellung, zwei der Linkskurve bzw. der Rechtskurve entsprechende Stellungen und eine Raststellung besitzt, die dem Differentialzustand des Nichtantriebs der Räder (4) der Maschine entspricht.

5. Vorrichtung nach Anspruch 4, **dadurch gekennzeichnet, dass** jeder Hydrogetriebemotor einen Freilauf besitzt, der zwischen seinem Hydromotor und seinem Getriebe angeordnet ist.

6. Vorrichtung nach einem der Ansprüche 4 und 5, **dadurch gekennzeichnet, dass** in den Versorgungskreis der Hydrogetriebemotoren (5,6) ein Durchsatzteiler (90) eingesetzt ist, der die Regelung der Arbeitsgeschwindigkeit der Maschine gestattet.

7. Vorrichtung nach Anspruch 6, **dadurch gekennzeichnet, dass** die Arbeitsgeschwindigkeit der Maschine 80 m/h bis 1,5 km/h beträgt.

8. Vorrichtung nach einem der Ansprüche 1 bis 7, **dadurch gekennzeichnet, dass** die linken und rechten Räder (4) der Maschine von entsprechenden Trägern (40) getragen werden, die Gehäuse für die Zahnräder-Kette-Einheiten (8,9,10) bilden und auf deren jedem ein erster Rahmen (42) montiert ist, wobei ein zweiter Rahmen (46) des den Förderer (12) tragenden Gestells auf dem ersten Rahmen (42) verschiebbar montiert ist und der Träger (40), der zugeordnete erste Rahmen (42) und der zugeordnete zweite Rahmen (46) jeweils Ständer (2,3) des Gestells der Maschine bilden, und dass zwischen dem ersten Rahmen (42) und dem zweiten Rahmen (46) jedes Ständers ein Hubzylinder (54) eingesetzt ist.

9. Vorrichtung nach Anspruch 8, **dadurch gekennzeichnet, dass** jeder zweite Rahmen (46) des Ständers (2,3) des Gestells (1) vertikale Schienen (48) aufweist, die durch vom ersten Rahmen (42) getragene Rollen (50) geführt und durch Querträger (52,53) miteinander verbunden sind, von denen einer (52) mit der Stange des Hubzylinders (54) verbunden ist.

10. Vorrichtung nach einem der Ansprüche 1 bis 9, **dadurch gekennzeichnet, dass** die Räder (4), die auf der der Kupplungsvorrichtung (24) entgegengesetzten Seite gelegen sind, die rechten Räder der Maschine sind und an den Enden des entsprechenden Trägers (40) mit Hilfe von Scharniergelenken (21,22) montiert sind, wobei auskuppelbare Kupplungsmittel (58,59,60,61) den Antrieb der rechten Räder (4) gewährleisten, wenn sie parallel zum Träger (40) in Arbeitsstellung der Maschine angeordnet sind, und dass jedem der rechten Räder (4) ein Zylinder (64) zum Verschwenken des Rads zwischen seiner Arbeitsstellung, in der die Kupplungsmittel in Eingriff sind, und seiner Transportstellung, in der die Kupplungsmittel ausgekuppelt sind, zugeordnet ist.

11. Vorrichtung nach Anspruch 10, **dadurch gekennzeichnet, dass** die auskuppelbaren Kupplungsmittel jedes der rechten Räder (4) eine mit dem Rad (4) fest verbundene Kupplungsscheibe (58) mit Kupplungslöchern (59) aufweist, die dazu bestimmt sind, einziehbare Kupplungsfinger (60) aufzunehmen, die elastisch in die ausgefahrene Stellung beaufschlagt sind und von einer ergänzenden Kupplungsscheibe (61) getragen werden, die durch den entsprechenden Hydromotor (6) angetrieben wird.

12. Vorrichtung nach einem der Ansprüche 1 bis 11, **dadurch gekennzeichnet, dass** sie ferner Mittel (75,77,80) zur partiellen Übertragung der Last des Schleppers (28) auf die auf der Seite der Kupplung gelegenen Räder (4) der Maschine aufweist, um ihre Haftung zu verbessern, wobei die Lastübertragungsmittel einen als Ersatz für die Schubstange des Schleppers angeordneten Zylinder (80) umfassen, der an seinem dem Schlepper entgegengesetzten Ende an einem mit den Zugstangen (77) des Schleppers verbundenen Ständer (75,78,81) der dem Schlepper zugeordneten Kupplungsvorrichtung (26) angelenkt ist, wobei die Ausdehnung dieses Zylinders (80) die Bewegung der dem Schlepper (28) zugeordneten Kupplungsvorrichtung (26) bezüglich ihres Ruhezustands nach oben durch Abstützung auf der Kupplungsvorrichtung (24) der Maschine bewirkt und dadurch das Anheben der Hinterräder des Schleppers (28) gewährleistet und die Verkürzung dieses Zylinders (80) bezüglich seines Ruhezustands die Winkelbewegung der Kupplungsvorrichtung (26) und damit das Anheben der Kupplungsvorrichtung (24) der Maschine und ihrer auf der Seite der Kupplung gelegenen Räder bewirkt, um die Maschine in die Transportstellung zu bringen.

13. Vorrichtung nach Anspruch 12, **dadurch gekennzeichnet, dass** die Mittel zur partiellen Lastübertragung ferner mindestens eine Stabilisierungsstange (86) umfassen, die mit einem Punkt (87) auf dem Fahrgestell des Schleppers und mit dem mit den Zugstangen (77) des Schleppers verbundenen Ende des Ständers (75,78,81) verbunden ist.

14. Vorrichtung nach einem der Ansprüche 1 bis 13, **dadurch gekennzeichnet, dass** die Mittel zur Entnahme und zum Umsetzen von Schwadenmaterial mindestens einen Schrägförderer (12) umfassen, der mit mindestens einem Endloselement (14) versehen ist, das mit Fingern (15) zur Entnahme und Mitnahme von Schwadenmaterial ausgerüstet ist, wobei dieser Förderer in der Arbeitsbewegungsrichtung der Maschine nach unten geneigt ist.

15. Vorrichtung nach einem der Ansprüche 1 bis 14, **dadurch gekennzeichnet, dass** sie einen Schrägförderer und eine im Gestell unter dem Förderer angeordnete Entwirrungsschnecke aufweist.

16. Vorrichtung nach einem der Ansprüche 1 bis 14, **dadurch gekennzeichnet, dass** sie zwei übereinander angeordnete Schrägförderer aufweist, die vom Gestell der Maschine getragen werden.

## Claims

1. Windrow turning apparatus, comprising a tractor (28) and a machine for turning the windrows, especially manure, comprising a chassis (1) equipped with wheels (4) on which are mounted means for sampling the material of the windrow and for transferring this material from the front of the machine to the back, said means being arranged transversely with respect to the operational direction of movement of the machine, means (30, 32, 34, 36) for actuating the sampling and transfer means (12) from the power take-off (38) of the tractor (28), a coupling device (24) extending perpendicularly to the wheels (4) of the machine in the operating position, this coupling device co-operating with a coupling device (26) associated with the tractor (28) articulated on the coupling device (24) of the machine and extending perpendicularly thereto in the working position, the tractor further constituting an energy source for supplying the actuating means (5, 6, 8, 9, 10) for the wheels (4) of the machine, **characterised in that** the coupling devices (24, 26) then constitute means for the tractor (28) to be pushed along by the machine and **in that** the wheels (4) located on the coupling side (24) of the machine are permanently oriented in the direction of operation of the machine, while the wheels (4) located opposite the coupling can be oriented between the operating direction and the transporting position, and **in that** it further comprises means (80, 26) for raising the coupling device (24) of the machine and the wheels (4) thereof located on the coupling device side in order to bring the machine into the transporting position.

2. Apparatus according to claim 1, **characterised in that** the means for actuating the sampling and transporting means (12) comprise a universal joint transmission (32) connected between a shaft (30) of said sampling and transfer means and the output shaft of a ring and pinion gearing (34) carried by the coupling device (24) of the machine and a universal joint transmission (36) for connecting the input shaft of the ring and pinion gearing (34) to the power take-off (38) of the tractor (28).

3. Apparatus according to claim 2, **characterised in that** the ring and pinion gearing (34) is of the type having superimposed housings, one of which contains the input shaft while the other contains the output shaft of the ring and pinion gearing, connected to each other by an intermediate vertical shaft about which the housings can be oriented relative to each other.

4. Apparatus according to one of claims 1 to 3, **characterised in that** the actuating means for the wheels (4) of the machine comprise hydraulic geared motors (5, 6) for driving the left-hand and right-hand wheels of the machine via sprocket wheel and chain assemblies (8, 9, 10) carried by the chassis (1) of the machine, said hydraulic geared motors being supplied with pressurised fluid from the hydraulic pump of the tractor (28) via a distributor (96) having a single operating lever (97) which has a neutral position, for normal operation, two positions corresponding to turning left and right, respectively, and a notched position corresponding to the differential state in which the wheels (4) of the machine are not driven.

5. Apparatus according to claim 4, **characterised in that** each hydraulic geared motor has a free wheel interposed between its hydraulic motor and its reducing gear.

6. Apparatus according to one of claims 4 and 5,
**characterised in that** interposed in the supply circuit for the hydraulic geared motors (5, 6) is a flow divisor (90) which allows the working speed of the machine to be regulated.

7. Apparatus according to claim 6, **characterised in that** the working speed of the machine is between 80 m/h and 1.5 km/h.

8. Apparatus according to one of claims 1 to 7, **characterised in that** the left and right wheels (4) of the machine are carried by corresponding beams (40) forming casings for the sprocket wheel and chain assemblies (8, 9, 10) and on each of them is mounted a first frame (42), a second frame (46) of the chassis carrying the conveyor (12) being slidably mounted on the first frame (42), the beam (40), the associated first frame (42) and the second frame (46) each forming the uprights (2, 3) of the chassis of the machine, and **in that** a lifting jack (54) is interposed between the first frame (42) and the second frame (46) of each upright.

9. Apparatus according to claim 8, **characterised in that** each second frame (46) of each upright (2, 3) of the chassis (1) has vertical rails (48) guided by rollers (50) carried by the first frame (42) and interconnected by crossbars (52, 53) one of which (52) is connected to the rod of the lifting jack (54).

10. Apparatus according to one of claims 1 to 9, **characterised in that** the wheels (4) located opposite the coupling device (24) are the right-hand wheels of the machine and are mounted at the ends of the corresponding beam (40) by means of hinged joints (21, 22), disengageable coupling means (58, 59, 60, 61) ensuring that the right-hand wheels (4) are driven when they are disposed parallel to the beam (40) in the working position of the machine and **in that** each of said right-hand wheels (4) is associated with a jack (64) for steering the wheel between its working position in which the coupling means are engaged and its transporting position in which the coupling means are disengaged.

11. Apparatus according to claim 10, **characterised in that** the disengageable coupling means of each of the right-hand wheels (4) comprise a coupling disc (58) which is integral with the wheel (4) and has coupling holes (59) adapted to receive retractable coupling.pawls (60) elastically biased in the output position which are carried by a complementary coupling disc (61) driven by the corresponding hydraulic motor (6).

12. Apparatus according to one of claims 1 to 11, **characterised in that** it further comprises means (75, 77, 80) for partially transferring the load of the tractor (28) to the wheels (4) of the machine on the coupling side so as to improve their grip, the load transfer means comprising a jack (80) provided as a replacement for the thrust bar of the tractor articulated at its end remote from the tractor on an upright (75, 78, 81) of the coupling device (26) associated with the tractor connected to the traction bars (77) thereof, the lengthening of said jack (80) causing upward displacement, relative to its resting position, of the coupling device (26) associated with the tractor (28) by bearing on the coupling device (24) of the machine and thereby ensuring that the back wheels of the tractor (28) are raised and said jack (80) is shortened, compared with its resting state, causing angular movement of the coupling device (26) and consequently raising the coupling device (24) of the machine and its wheels located on the coupling device side, to bring the machine into the transporting position.

13. Apparatus according to claim 12, **characterised in that** the means for partially transferring the load further comprise at least one stabilising bar (86) connected at a point (87) to the chassis of the tractor and, at the end of the upright (75, 78, 81), connected to the traction bars (77) of the tractor.

14. Apparatus according to any one of claims 1 to 13, **characterised in that** the means for sampling and transferring the material of the windrow comprise at least one oblique conveyor (12) fitted with at least one endless component (14) provided with pawls (15) for sampling and driving the material of the windrow, said conveyor being tilted downwards in the operational direction of movement of the machine.

15. Apparatus according to any one of claims 1 to 14, **characterised in that** it comprises an oblique conveyor and a combing screw disposed in the chassis above the conveyor.

16. Apparatus according to any one of claims 1 to 14, **characterised in that** it comprises two superimposed oblique conveyors carried by the chassis of the machine.
